# EUROPEAN PATENT APPLICATION

(11) **EP 4 574 725 A1**
(43) Date of publication of application: **25.06.2025**
(21) Application number: 24863048.5
(22) Date of filing: 08.08.2024
(51) Int. Cl.: B65H 35/00, H01M 10/04, H01M 50/59

(54) **TAPE FORMING JIG, JELLY ROLL TAPING APPARATUS INCLUDING SAME, AND JELLY ROLL TAPING METHOD**

(30) Priority: 05.09.2023 KR 20230117910
(71) Applicant: LG Energy Solution, Ltd., Seoul 07335 (KR)
(72) Inventor: KIM, Seo-Yeon, Daejeon 34122 (KR); KIM, In-Kwon, Daejeon 34122 (KR); LEE, Jun-Oh, Daejeon 34122 (KR)
(74) Representative: Goddar, Heinz J.
(86) International application number: PCT/KR2024/011819
(87) International publication number: WO 2025/053466

(57) **Abstract**

The tape forming jig according to the present disclosure may include a forming plate including a plate body, and a forming hole formed through the thickness direction of the plate body and configured such that the diameter thereof becomes narrower from a first surface of the plate body to a second surface opposite to the first surface; and a forming block provided to be able to enter the forming hole with a cross-section corresponding to the shape of the forming hole as viewed from the outside of the second surface of the plate body.

## Description

### TECHNICAL FIELD

The present disclosure relates to a device and a method for manufacturing a secondary battery, and more specifically, to a tape forming jig, a jelly roll taping device, and a jelly roll taping method applied to a process for taping a cylindrical electrode assembly and an electrode current collector plate with an insulating tape.

This application is based on and claims priority from Korean Patent Application No. 10-2023-0117910, filed on September 5, 2023, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to electric vehicles (EVs) or hybrid electric vehicles (HEVs) driven by electric power sources.

Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5V to 4.5V.

Additionally, secondary batteries may be classified into cylindrical, prismatic, and pouch-type battery cells depending on their shape or the type of exterior case. Here, in the case of cylindrical battery cells, a separator, which is an insulator, is interposed between a positive electrode and a negative electrode, and wound to form an electrode assembly in the form of a jelly roll, which is then inserted into the battery can to form a battery.

On the other hand, it has been pointed out that small cylindrical battery cells with a form factor of 18650 or 21700 according to the prior art are not suitable for application to electric vehicles due to large resistance and heat generation during rapid charging. Accordingly, a cylindrical battery cell (so-called tab-less cylindrical battery cell) having a structure in which a positive electrode uncoated portion and a negative electrode uncoated portion are designed to be located at the top and bottom of a jelly roll-type electrode assembly, respectively, and an electrode current collector plate is welded to the uncoated portion to improve current collection efficiency has been proposed.

The positive electrode current collector plate coupled to the positive electrode uncoated portion may be connected to the positive electrode terminal of the secondary battery, and the negative electrode current collector plate coupled to the negative electrode uncoated portion may be connected to the negative electrode terminal of the secondary battery. Here, the negative electrode terminal of the secondary battery may be a battery can, and the positive electrode terminal may be a cap plate of a sealing body that seals the opening of the battery can. Such a cylindrical battery cell, for example, performs a taping process of attaching an insulating tape to the top end of the jelly roll to which the positive electrode current collector plate is coupled before accommodating the jelly roll in the battery can, and then secures insulation between the positive electrode current collector plate and the battery can by accommodating the jelly roll in the battery can. Here, the taping process may be performed by surrounding the top end of the jelly roll and the space above the top end with an insulating tape, and then folding the end circumference of the insulating tape located higher than the top end of the jelly roll and attaching it to the electrode current collector plate at the top end of the jelly roll.

However, there is no simple yet effective forming jig, as a forming jig that may easily form the end circumference of the insulating tape and attach it to the electrode current collector plate when performing the taping process.

### DISCLOSURE

### Technical Problem

The present disclosure is designed to solve the problems of the related art, and therefore the present disclosure is directed to providing a simple yet effective tape forming jig, as a tape forming jig capable of forming the end circumference of the insulating tape located higher than the top end of a jelly roll, which is a cylindrical electrode assembly, and attaching the insulating tape onto the electrode current collector located at the top end of the jelly roll.

The present disclosure is also directed to providing a jelly roll taping device and a jelly roll taping method capable of applying the forming jig.

However, technical problems to be solved by the present disclosure are not limited to the above-described problems, and other problems not mentioned herein may be clearly understood by those skilled in the art from the following description of the present disclosure.

### Technical Solution

A tape forming jig according to the present disclosure for solving the above problem is applicable to a process of taping a jelly roll, which is a cylindrical electrode assembly, and an electrode current collector plate disposed on the uppermost end surface of the jelly roll when the jelly roll is erected, with an insulating tape, and the tape forming jig may include a forming plate including a plate body, and a forming hole formed through the thickness direction of the plate body and configured such that the diameter thereof becomes narrower from a first surface of the plate body to a second surface opposite to the first surface; and a forming block provided to be able to enter the forming hole with a cross-section corresponding to the shape of the forming hole as viewed from the outside of the second surface of the plate body.

An inner circumferential surface of the forming hole may be formed as a curved surface rounded in the thickness direction of the plate body.

The forming plate may include a first division pressing portion provided on the second surface of the plate body and protruding from an edge of the forming hole toward a center of the forming hole.

The first division pressing portion may be in plurality, and the plurality of first division pressing portions may be provided at regular intervals along a circumferential direction of the forming hole.

The forming block may include a second division pressing portion provided to be able to enter an empty space between the plurality of first division pressing portions.

The forming hole may include a first hole section into which an uppermost end surface edge of the jelly roll is fitted; and a second hole section formed with a narrower diameter than the first hole section so that an uppermost end surface of the jelly roll does not enter.

The forming block may have a thickness corresponding to at least a depth of the second hole section.

The tape forming jig may further include a first support member stretchable in length and provided such that one end is coupled to the forming plate and the other end is coupled to an external structure to be able to support the forming plate to be positioned at a predetermined height; and a second support member provided such that one end is coupled to the forming block and the other end is coupled to the external structure and capable of supporting the forming block to be positioned relatively higher than the forming plate.

The first support member may include a support housing fixedly coupled to the external structure; a support rod that is translationally movably connected inside the support housing; and a spring member wrapping the circumference of the support rod on the outside of the support housing, wherein one end of the support rod may be fixedly coupled to the plate body.

The second support member may be configured to support the forming block so that the forming block is located at a position where the forming block is inserted into the forming hole when the forming plate is raised.

According to another aspect of the present disclosure, there may be provided a jelly roll taping device which includes the above-described tape forming jig, and folds the end circumference portion of an insulating tape in the insulating tape surrounding the circumference of a jelly roll with an electrode current collector plate disposed on the uppermost end surface and the space above the uppermost end surface of the jelly roll to attach them onto the electrode current collector plate, the jelly roll taping device including:
a top frame configured to suspend the tape forming jig at a predetermined height; and
a jelly roll lifting unit disposed below the tape forming jig and moving the jelly roll in an upward and downward direction.

The top frame may be provided to suspend a plurality of tape forming jigs along the circumferential direction, and the jelly roll lifting unit may include a lifting rod that is located vertically below each of the tape forming jigs and has a backup tip at the top end for pushing the jelly roll up toward the forming hole and a roller at the bottom end; and a cylindrical cam unit having a groove in which the roller is fitted on the outer circumferential surface, wherein the groove is in a curved shape along the circumferential direction so that the lifting rod moves up and down when rotating.

The jelly roll taping device may be configured such that when the cylindrical cam unit rotates once, each of the lifting rods located vertically below each of the tape forming jigs moves up and down once.

The jelly roll taping device may further include a roll shelf provided below the tape forming jig and configured to support the jelly roll, wherein the roll shelf may include a tip passage hole through which the backup tip may pass.

The backup tip of the lifting rod may be configured to vertically pass through the tip passage hole provided in the roll shelf to lift the jelly roll from the roll shelf.

According to still another aspect of the present disclosure, there may be provided a jelly roll taping method for taping a jelly roll, which is a cylindrical electrode assembly, and an electrode current collector plate together with an insulating tape using the above-described tape forming jig.

The jelly roll taping method may include a step of attaching the electrode current collector plate to the uppermost end surface of the jelly roll; a step of attaching the insulating tape to the jelly roll so that the circumference of the jelly roll and the space above the uppermost end surface of the jelly roll are wrapped by the insulating tape; a primary tape forming step in which the end circumference portion of the insulating tape is introduced into the forming hole of the forming plate and gathered in unison toward the center of the forming hole; and a secondary tape forming step in which the forming block is introduced into the forming hole in the opposite direction to the jelly roll to press the end circumference portion of the insulating tape gathered therein and attach it to the electrode current collector plate.

### Advantageous Effects

According to one aspect of the present disclosure, there may be provided a simple yet effective tape forming jig, as a forming jig capable of forming the end circumference of the insulating tape located higher than the top end of a jelly roll, which is a cylindrical electrode assembly, and attaching the insulating tape onto the electrode current collector located at the top end of the jelly roll.

According to another aspect of the present disclosure, there may be provided a jelly roll taping device and a jelly roll taping method capable of applying the forming jig.

The effects to be obtained by the present disclosure are not limited to the above-described effects, and other effects not mentioned herein may be clearly understood by those skilled in the art from the following description of the present disclosure.

### DESCRIPTION OF DRAWINGS

FIG. 1 schematically shows a plan view (a) and a side view (b) of a jelly roll to which an insulating tape is attached before forming.
FIG. 2 schematically shows a plan view (a) and a side view (b) of a jelly roll to which an insulating tape is attached after forming.
FIG. 3 is a perspective view schematically showing the configuration of a tape forming jig according to an embodiment of the present disclosure.
FIG. 4 is a view showing the tape forming jig of FIG. 3 as viewed from the bottom of the forming plate.
FIG. 5 is a schematic cross-sectional view of the forming hole portion of the forming plate of FIG. 3.
FIG. 6 is a perspective view showing of a jelly roll and the end circumference of an insulating tape inserted into a forming hole of a forming plate according to an embodiment of the present disclosure.
FIGS. 7 to 9 are process drawings showing a tape forming process using a tape forming jig according to another embodiment of the present disclosure.
FIG. 10 is a schematic perspective view of a jelly roll taping device including a tape forming jig according to an embodiment of the present disclosure.
FIG. 11 is a side view of FIG. 10.
FIG. 12 is a partial enlarged view of FIG. 10.
FIG. 13 is a view of the tape forming jig of FIG. 12 as viewed from below.
FIG. 14 is a view showing an operation example of a jelly roll taping device according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, when a part is said to "include" a component, this means that it may further include other components rather than excluding other components, unless specifically states to the contrary.

The tape forming jig to be described hereinafter may be applied to a taping process of pressing the end circumference of an insulating tape that is rolled higher than a jelly roll, which is a cylindrical electrode assembly, and attaching it to an electrode current collector plate seated on the uppermost end surface of the jelly roll. The purpose of the taping process here is to secure insulation between the electrode current collector plate and the battery can by wrapping the top end circumference of the jelly roll and the electrode current collector plate with an insulating tape before putting the jelly roll into the battery can.

Meanwhile, it should be noted that the scope of the tape forming jig according to the present disclosure should not be misinterpreted as being limited to the use of forming an insulating tape targeting a jelly roll and an electrode current collector plate. That is, the tape forming jig according to the present disclosure may be applied not only to a taping process targeting a jelly roll and an electrode current collector plate, but also to forming a tape or a material identical or similar thereto in order to integrally wrap the circumference of a cylindrical structure and its top surface or bottom surface.

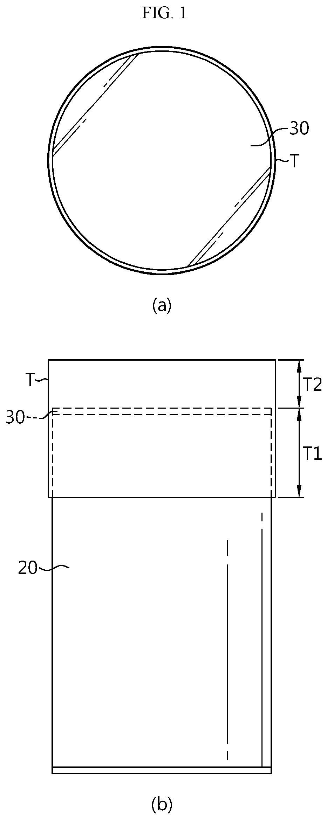

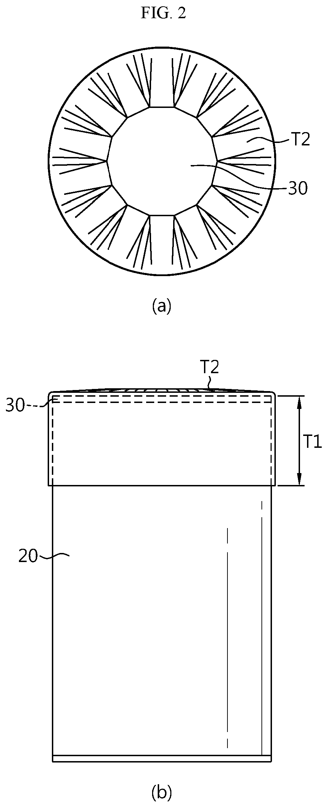

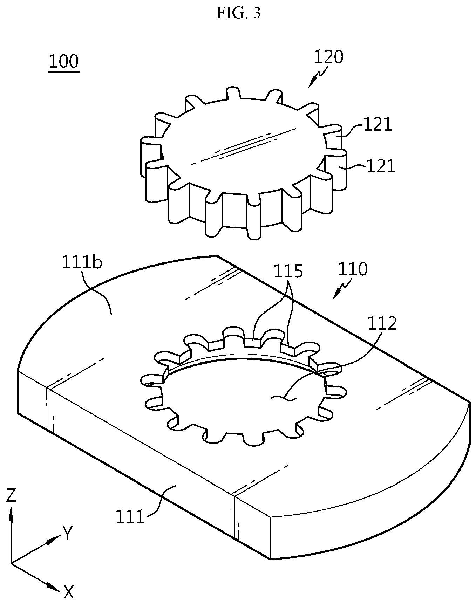

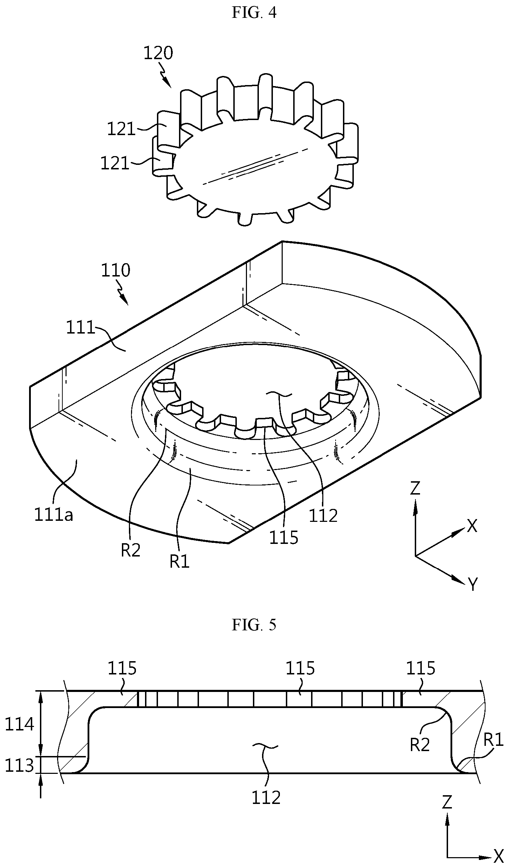

FIG. 1 schematically shows a plan view (a) and a side view (b) of a jelly roll to which an insulating tape is attached before forming, FIG. 2 schematically shows a plan view (a) and a side view (b) of a jelly roll to which an insulating tape is attached after forming, FIG. 3 is a perspective view schematically showing the configuration of a tape forming jig according to an embodiment of the present disclosure, FIG. 4 is a view showing the tape forming jig of FIG. 3 as viewed from the bottom of the forming plate, and FIG. 5 is a schematic cross-sectional view of the forming hole portion of the forming plate of FIG. 3.

First, the form of the insulating tape attached to the jelly roll to be formed by the tape forming jig according to the present disclosure will be briefly described.

For example, when a jelly roll, which is a cylindrical electrode assembly, is erected, an insulating tape T is attached to the jelly roll 20 so as to surround the top end circumference of the jelly roll 20 and the space above the uppermost end surface where the electrode current collector plate 30 is located. That is, as shown in FIG. 1, the top end circumference of the jelly roll 20 may be wrapped by the part indicated as 'T1' in the insulating tape T, and the space above the uppermost end surface of the jelly roll 20 may be wrapped by the part indicated as 'T2' in the insulating tape T. Here, the part indicated as 'T2' is the part that requires forming, and will be referred to as the end circumference T2 of the insulating tape hereinafter. In this specification, the jelly roll taping process may be referred to as a process of forming the end circumference T2 of the insulating tape wound around the jelly roll 20 as described above, gathering it to the center, and attaching it to the edge circumference of the electrode current collector plate 30, as shown in FIG. 2.

The tape forming jig 100 according to the present disclosure allows the work of forming the end circumference T2 of the insulating tape wound around the jelly roll 20, gathering it to the center, and attaching it to the edge circumference of the electrode current collector plate 30 to be performed very simply and quickly during the jelly roll taping process.

Looking at the main configuration of the tape forming jig 100 according to the present disclosure, the tape forming jig 100 includes a forming plate 110 and a forming block 120, as shown in FIGS. 3 and 4.

The forming plate 110 serves to gather the end circumference T2 of the cylindrically wound insulating tape toward the center, and the forming block 120 serves to press the end circumference T2 of the insulating tape gathered therein and attach it to the electrode current collector plate 30.

Specifically, the forming plate 110 may include a plate body 111 and a forming hole 112 that is formed through the thickness direction of the plate body 111 and is configured such that the diameter thereof becomes narrower from the first surface 111a of the plate body 111 to the second surface 111b opposite to the first surface 111a.

In particular, the inner circumferential surface of the forming hole 112 may be formed as a curved surface rounded in the thickness direction of the plate body 111.

For example, as shown in FIGS. 4 and 5, the rounded curved surface according to this embodiment may include a first curved surface R1, a vertical surface, and a second curved surface R2 along the direction of the second surface 111b from the first surface 111a of the plate body 111.

In the first curved surface R1, the diameter of the forming hole 112 may be formed such that it steeply narrows toward the thickness direction (Z direction) of the forming plate 110 in FIG. 5 and then gradually narrows.

For example, as the jelly roll 20 rises from the lower portion of the forming plate 110, the end circumference T2 of the insulating tape enters the first curved surface R1 section, and as the jelly roll 20 continues to rise in this state, the end circumference T2 of the insulating tape may be folded and gathered toward the center while rising along the first curved surface R1.

The vertical surface is a part of the inner circumferential surface of the forming hole 112 where there is little change in the diameter of the forming hole 112. The end circumference T2 of the insulating tape gathered along the first curved surface R1 may rise vertically along the vertical surface section. As a modified example, the diameter of the forming hole 112 may be gradually narrowed in the vertical surface section, so that when the jelly roll 20 rises, the end circumference T2 of the insulating tape may be gathered more toward the center in the vertical surface.

In the second curved surface R2, the diameter of the forming hole 112 may be formed such that it gradually narrows toward the thickness direction (Z direction) of the forming plate 110 and then steeply narrows, as opposed to the change in the diameter of the forming hole 112 in the first curved surface R1. That is, the first curved surface R1 may be provided such that the center of curvature is located outside the forming hole 112, and the second curved surface R2 may be provided such that the center of curvature is located inside the forming hole 112.

According to this second curved surface R2, the end circumference T2 of the insulating tape raised along the vertical surface may be guided along the second curved surface R2 and gathered almost horizontally toward the center.

Referring to FIG. 5 again, the forming hole 112 may include a first hole section 113 into which the top end border of the jelly roll 20 may be fitted, and a second hole section 114 formed with a narrower diameter than the first hole section 113 so that a top end of the jelly roll 20 does not enter.

In this embodiment, the first hole section 113 may be specified as a section of the first curved surface R1, and the second hole section 114 may be specified as a section of the second curved surface R2 from the vertical surface. According to the configuration of the forming hole 112 according to this embodiment, the jelly roll 20 may enter the first hole section 113, and the end circumference of the insulating tape may enter the second hole section 114 and be formed. That is, the end circumference T2 of the insulating tape may enter the second hole section 114 while being folded toward the center along the rounded curved surface in the forming hole 112. And, the forming block 120 may enter the forming hole 112 in a direction opposite to the entry direction of the jelly roll 20 and press the end circumference T2 of the insulating tape gathered toward the center. Here, the forming block 120 has a thickness corresponding to at least the depth of the second hole section 114.

In this way, since the uppermost end surface of the jelly roll 20 does not enter the forming hole 112, the forming block 120 may press the end circumference of the insulating tape in the forming hole 112. Accordingly, the end circumference T2 of the insulating tape may be neatly attached onto the electrode current collector plate 30.

Referring to FIGS. 3 and 4 again, the forming plate 110 may further include a first division pressing portion 115 provided on the second surface 111b of the plate body 111 and protruding from the edge of the forming hole 112 toward the center of the forming hole 112.

The first division pressing portion 115 according to this embodiment may be in plurality, and the plurality of first division pressing portions 115 may be provided at regular intervals along the circumferential direction of the forming hole 112. This forming plate 110 has empty spaces between the neighboring first division pressing portions 115 when the forming hole 112 is viewed from above.

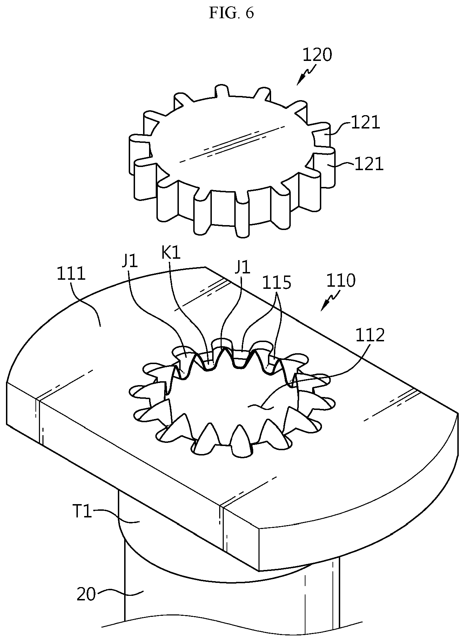

According to the forming plate 110 as described above, when the jelly roll 20 rises as shown in FIG. 6, the portions K1 corresponding to the lower sides of the first division pressing portions 115 at the end circumference T2 of the insulating tape are each blocked by the corresponding first division pressing portions 115 and folded horizontally toward the center of the forming hole 112, and the portions J1 corresponding to the empty spaces between the first division pressing portions 115 may come out upward through the corresponding empty spaces. As a result, the end circumference T2 of the insulating tape may be folded in a regular shape and gathered toward the center of the forming hole 112.

For reference, when the end circumference T2 of the cylindrically wound insulating tape is bent toward the center, some of the bent portions are bound to overlap each other. However, at this time, when the end circumference T2 of the insulating tape is pressed and bent at once, the end circumference T2 of the insulating tape may be crushed or folded irregularly, which may cause the insulating tape T to be partially lifted or damaged. However, in the case of the present disclosure, as shown in FIG. 6, some of the end circumference T2 of the insulating tape is first pressed by the first division pressing portions 115, and the remaining portions except for the pressed portions may be folded into the empty space between the first division pressing portions 115 and come out. In this state, when the end circumference T2 of the insulating tape is pressed by the forming block 120, the problem described above does not occur.

The forming block 120 may be provided to be able to enter the forming hole 112 with a cross-section corresponding to the shape of the forming hole 112 as viewed from the outside of the second surface 111b of the plate body 111.

In particular, the forming block 120 according to this embodiment may include a second division pressing portion 121 that is provided to be able to enter the empty space between the plurality of first division pressing portions 115 provided on the forming plate 110.

The second division pressing portion 121 may be provided in a form capable of matching the empty space between the first division pressing portions 115. That is, the second division pressing portions 121 of the forming block 120 may be provided in a form that matches the shape of the empty spaces between the first division pressing portions 115 of the forming plate 110.

This forming block 120 may be inserted into the forming hole 112 from the upper portion of the forming plate, for example, in a state where the jelly roll 20 is fitted into the lower portion of the forming plate 110, and the end circumference T2 of the insulating tape is gathered toward the center in the forming hole 112, as shown in FIG. 6. At this time, the end circumference of the insulating tape gathered toward the center in the forming hole 112 may be pressed by the forming block 120 to be attached to the electrode current collector plate 30 of the jelly roll 20. In particular, the end circumferential portions J1 of the insulating tape that come out upward through the space between the first division pressing portions 115 may be pressed collectively by the second division pressing portions 121 of the forming block 120, and then the remaining portions may be pressed by the forming block 120 to be regularly attached to the electrode current collector plate 30.

As described above, the tape forming jig 100 according to an embodiment of the present disclosure may tape easily and effectively the top end circumference of the jelly roll 20 and the electrode current collector plate 30 placed on the uppermost end surface of the jelly roll 20 integrally.

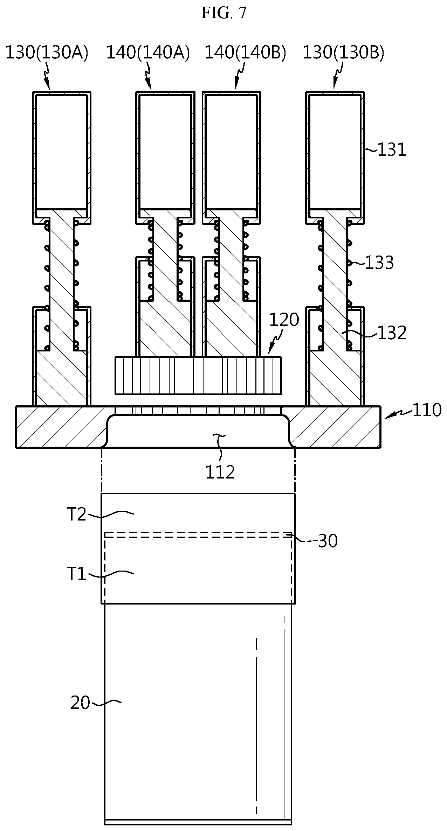

FIGS. 7 to 9 are process drawings showing a tape forming process using a tape forming jig 100 according to another embodiment of the present disclosure.

Next, the tape forming jig 100 according to another embodiment of the present disclosure will be briefly described with reference to FIGS. 7 to 9.

The same reference numerals as in the above-described embodiment represent the same members, and duplicate descriptions of the same members will be omitted, and differences from the above-described embodiment will be mainly described.

The tape forming jig 100 according to another embodiment of the present disclosure includes a first support member 130 that supports the forming plate 110 at a constant height, and a second support member 140 that supports the forming block 120 to be positioned relatively higher than the forming plate 110.

The first support member 130 may be provided such that one end is coupled to the forming plate 110 and the other end may be coupled to an external structure, and it may be provided to be stretchable in length. The second support member 140 may be provided such that one end is coupled to the forming block 120 and the other end may be coupled to an external structure, and it may be provided to be stretchable in length like the first support member 130.

Specifically, referring to FIG. 7, the first support member 130 includes a support housing 131 fixedly coupled to the external structure, a support rod 132 that is translationally movably connected inside the support housing 131, and a spring member 133 wrapping the circumference of the support rod 132 on the outside of the support housing 131, wherein the support rod 132 may be configured such that one end is fixedly coupled to the plate body 111.

The first support member 130 may include a first_1 support member 130A connected to one edge of the plate body 111 and a first_2 support member 130B connected to the other edge of the plate body 111. Accordingly, the forming plate 110 may be connected to the first_1 support member 130A and the first_2 support member 130B and positioned at a certain height from the ground in a horizontal state.

Additionally, the second support member 140 may be configured to support the forming block 120 so that the forming block 120 is located at a position where it may be inserted into the forming hole 112 when the forming plate 110 is raised.

Preferably, the second support member 140 may also have substantially the same structure as the first support member 130, and may be configured to include a spring member and be stretchable in length. Additionally, the second support member 140 may include a second_1 support member 140A and a second_2 support member 140B so that the forming block 120 may be stably maintained in a horizontal state without being tilted from side to side.

According to the second support member 140, when the forming plate 110 is raised and the forming block 120 is inserted into the forming hole 112, the forming block 120 may elastically press the end circumference T2 of the insulating tape without being tilted from side to side.

Next, with reference to FIGS. 7 to 9, a jelly roll taping method will be briefly described as follows.

The electrode current collector plate 30 is attached to the uppermost end surface of the jelly roll 20, which is a cylindrical electrode assembly. Here, the electrode current collector plate 30 is in the form of a metal disc and may be coupled to the electrode uncoated portion of the wound electrode plate by welding.

Next, as shown in FIG. 7, the insulating tapes T1, T2 are attached to the jelly roll 20 so that the circumference of the jelly roll 20 and the space above the uppermost end surface of the jelly roll 20 are wrapped by the insulating tapes.

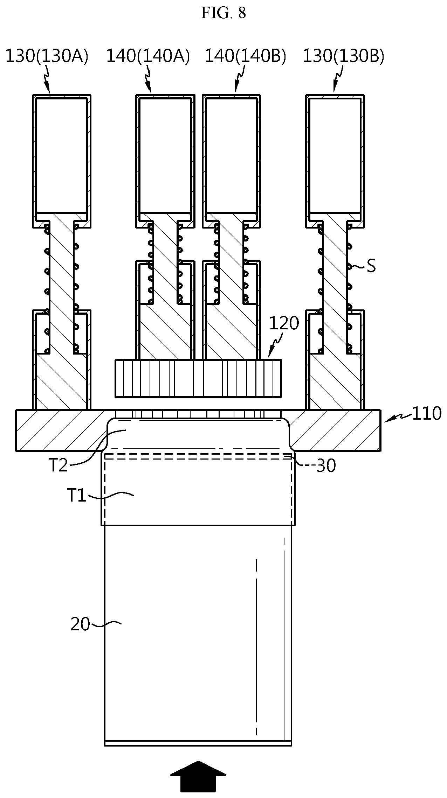

Then, as shown in FIG. 8, a primary tape forming process is performed in which the end circumference T2 portion of the insulating tape is introduced into the forming hole 112 of the forming plate 110 and gathered in unison toward the center of the forming hole 112.

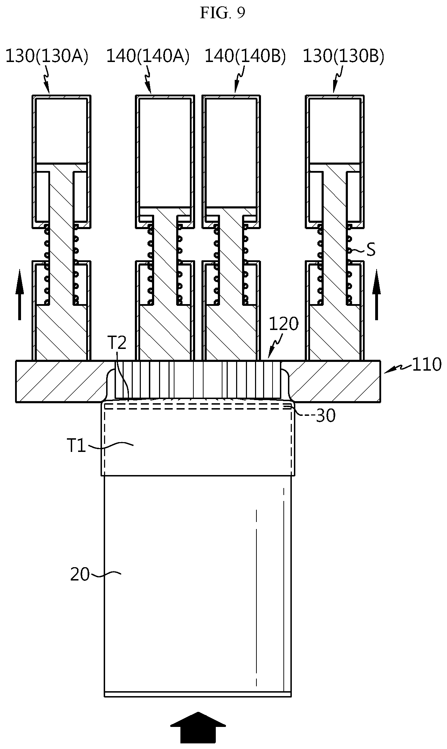

Then, as shown in FIG. 9, a secondary tape forming process is performed in which the forming block 120 is introduced into the forming hole 112 in the opposite direction to the jelly roll 20 to press the end circumference T2 portion of the insulating tape gathered therein and attach it to the electrode current collector plate 30.

At this time, as shown in FIG. 8, when the jelly roll 20 is pushed up in a state where the top end edge of the jelly roll 20 is in contact with the first curved surface R1 of the forming hole 112, the spring member 133 of the first support member 130 is compressed, and thus the support rod 132 and the forming plate 110 are raised in unison. Then, as shown in FIG. 9, the end circumference T2 of the insulating tape may be attached to the surface of the electrode current collector plate 30 while being pressed by the forming block 120 entering the forming hole 112.

In this way, after performing the jelly roll taping process using the tape forming jig 100 according to the present disclosure, the jelly roll 20 may be accommodated in a cylindrical battery can made of a metal material. In this case, the electrode current collector plate 30 may be wrapped with the insulating tape T and thus may be insulated from the battery can.

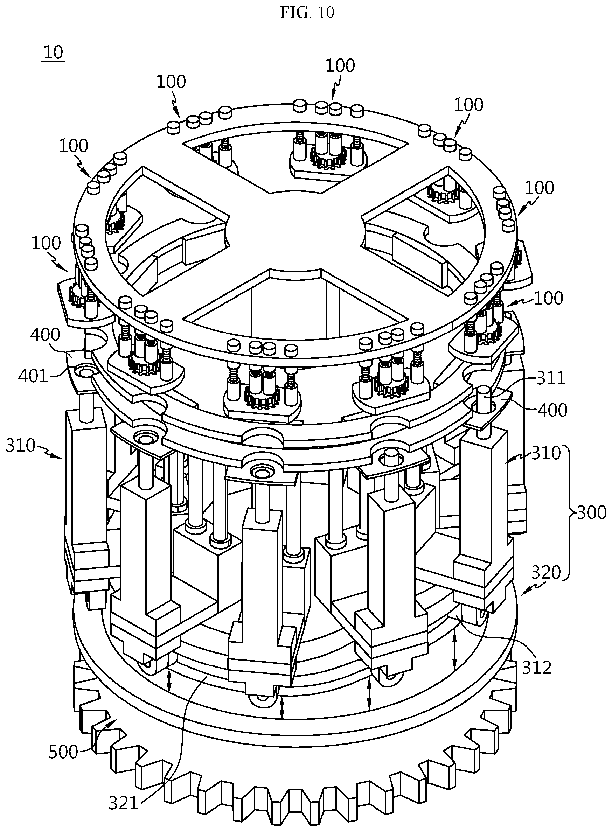

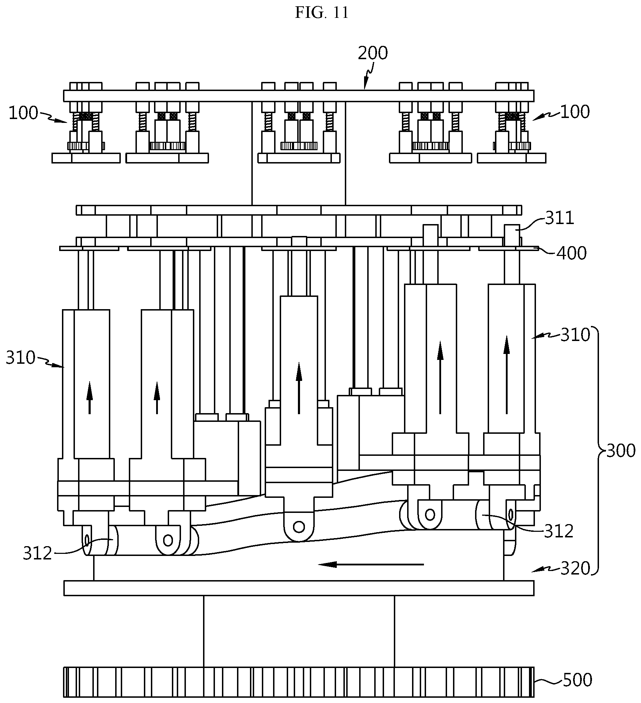

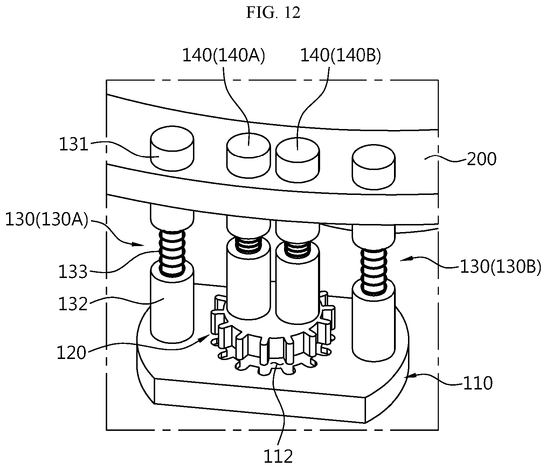

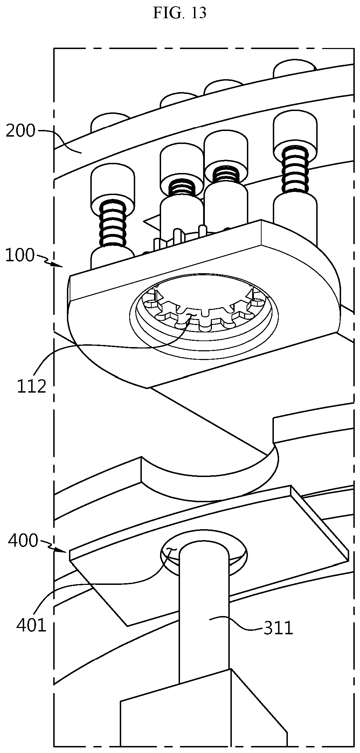

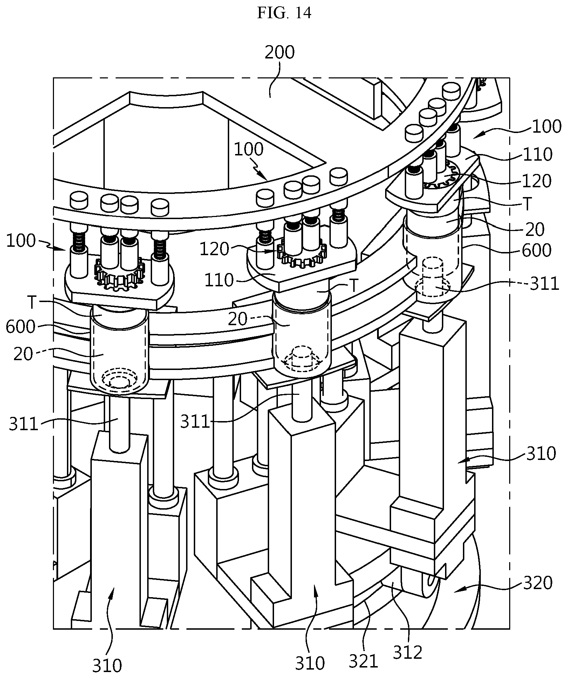

FIG. 10 is a schematic perspective view of a jelly roll taping device 10 including a tape forming jig 100 according to an embodiment of the present disclosure, FIG. 11 is a side view of FIG. 10, FIG. 12 is a partial enlarged view of FIG. 10, FIG. 13 is a view of the tape forming jig 100 of FIG. 12 as viewed from below, and FIG. 14 is a view showing an operation example of a jelly roll taping device 10 according to an embodiment of the present disclosure.

Next, a jelly roll taping device 10 including the tape forming jig 100 described above will be described with reference mainly to FIGS. 10 to 14.

The jelly roll taping device 10 according to the present disclosure may include a top frame 200 configured to suspend the tape forming jig 100 at a predetermined height, and a jelly roll lifting unit 300 disposed below the tape forming jig 100 and moving the jelly roll 20 in an upward and downward direction, as shown in FIGS. 10 and 11.

As shown in FIG. 10, the top frame 200 may be provided to suspend a plurality of tape forming jigs 100 along the circumferential direction. Specifically, as shown in FIGS. 12 and 13, one end of the first support member 130 may be fixedly coupled to the forming plate 110, and the other end thereof may be fixedly coupled to the top frame 200. Although shown schematically for convenience of drawing, the coupling between the first support member 130 and the forming plate 110 and/or the top frame 200 may be made by a bolt fastening or snap-fit fastening method.

Additionally, one end of the second support member 140 may be fixedly coupled to the forming block 120 and the other end thereof may be fixedly coupled to the top frame 200. In this case, the second support member 140 supports the forming block 120 higher than the forming plate 110 at a position where the forming block 120 may be inserted into the forming hole 112 of the forming plate 110. The coupling between the second support member 140 and the forming block 120 and/or the top frame may be made by a bolt fastening or snap-fit fastening method.

The jelly roll lifting unit 300 may include a lifting rod 310 that is located vertically below each of the tape forming jigs 100 and has a backup tip 311 at the top end for pushing the jelly roll 20 up toward the forming hole 112 and a roller 312 at the bottom end, and a cylindrical cam unit 320 having a groove 321 in which the roller 312 is fitted on the outer circumferential surface, and the groove 321 being in a curved shape along the circumferential direction so that the lifting rod 310 moves translationally up and down when rotating.

Specifically, each lifting rod 310 may be configured such that the roller 312 provided at the bottom end is connected to the groove 321 of the cylindrical cam unit 320, as shown in FIG. 11, and the backup tip 311 provided at the top end is positioned vertically below the forming hole 112 of the forming plate 110, as shown in FIG. 13.

Additionally, each lifting rod 310 may be configured not to move in the left, right, forward, or backward directions, but to move up and down according to the change in height of the groove 321 to which the roller 312 of each lifting rod 310 is connected when the cylindrical cam unit 320 rotates.

The jelly roll taping device 10 may further include a roll shelf 400 provided below the tape forming jig 100 and configured to support the jelly roll 20. The roll shelf 400 may include a tip passage hole 401 through which the backup tip 311 may pass, as shown in FIG. 13.

Preferably, as shown in FIG. 14, the jelly roll 20 to which the insulating tape T is attached may be contained in a roll carrier 600 and placed on the roll shelf 400. The roll carrier 600 may have a hole on the bottom that has a larger diameter than the backup tip 311. Accordingly, when the lifting rod 310 rises, the backup tip 311 may vertically pass through the tip passage hole 401 of the roll shelf 400 and the hole of the roll carrier 600 to lift the jelly roll 20.

Meanwhile, the jelly roll taping device 10 may be configured such that when the cylindrical cam unit 320 rotates once, each of the lifting rods 310 located vertically below each of the tape forming jigs 100 moves up and down once.

For example, when the cylindrical cam unit 320 rotates clockwise from 0 degree to 180 degrees with the position of each of the lifting rods 310 as the origin, each of the lifting rods 310 may be configured such that the backup tip 311 rises from the lowest point to the highest point. And, when the cylindrical cam unit 320 rotates from 180 degrees to 360 degrees, each of the lifting rods 310 may be configured such that the backup tip 311 descends from the highest point to the lowest point.

In the jelly roll taping device 10 according to this embodiment, ten tape forming jigs 100 and ten lifting rods 310 are included, roll shelf 400 is provided between each tape forming jig 100 and each lifting rod 310, and a jelly roll 20 to which an insulating tape T is attached may be seated one by one on each of the roll shelfs 400. And, when the cylindrical cam unit 320 rotates, the ten lifting rods 310 placed vertically below the ten tape forming jigs 100 may be configured to sequentially repeat the lifting and lowering movement.

Therefore, as shown in FIG. 14, as the cylindrical cam unit 320 rotates clockwise, each lifting rod 310 rises, and thus each jelly roll 20 sequentially rises toward each tape forming jig 100, so that the end circumference T2 of the insulating tape may be formed and attached to the electrode current collector plate 30 of each jelly roll 20, as described above. Thereafter, each lifting rod 310 descends again, and thus each jelly roll 20 with completed taping may be seated again on the original roll shelf 400. The jelly rolls 20 with completed taping in this way may be sequentially discharged to the outside for another process.

Meanwhile, the jelly roll taping device 10 may further include a gear unit 500 that meshes with the toothed gear of the jelly roll 20 receiving device or the jelly roll 20 discharging device and rotates at its lowermost end, for example, so as to be linked with the jelly roll 20 receiving device or the jelly roll 20 discharging device.

According to the configuration and operating mechanism of the jelly roll taping device 10 according to the present disclosure configured in a rotary type as described above, taping operations for a large number of jelly rolls may be performed quickly and reliably, thereby improving the production yield.

Although the preferred embodiments of the present disclosure have been shown and described hereinabove, the present disclosure is not limited to the above-described specific preferred embodiments, and it is obvious that various modifications may be implemented by those who have ordinary skill in the art to which the present disclosure appertains without departing from the gist of the present disclosure claimed in the claims, wherein such modifications may be made thereto within the scope of the claims.

Meanwhile, the terms indicating directions as used herein such as upper, lower, left, and right are used for convenience of description only, and it is obvious to those skilled in the art that the terms may vary depending on the position of an observer or a reference object.

## Claims

1. A tape forming jig, which is applicable to a process of taping a jelly roll, which is a cylindrical electrode assembly, and an electrode current collector plate disposed on the uppermost end surface of the jelly roll when the jelly roll is erected, with an insulating tape, the tape forming jig comprising:
a forming plate comprising a plate body, and a forming hole formed through the thickness direction of the plate body and configured such that the diameter thereof becomes narrower from a first surface of the plate body to a second surface opposite to the first surface; and
a forming block provided to be able to enter the forming hole with a cross-section corresponding to the shape of the forming hole as viewed from the outside of the second surface of the plate body.

2. The tape forming jig according to claim 1,
wherein an inner circumferential surface of the forming hole is formed as a curved surface rounded in the thickness direction of the plate body.

3. The tape forming jig according to claim 1,
wherein the forming plate comprises a first division pressing portion provided on the second surface of the plate body and protruding from an edge of the forming hole toward a center of the forming hole.

4. The tape forming jig according to claim 3,
wherein the first division pressing portion is in plurality, and the plurality of first division pressing portions are provided at regular intervals along a circumferential direction of the forming hole.

5. The tape forming jig according to claim 4,
wherein the forming block comprises a second division pressing portion provided to be able to enter an empty space between the plurality of first division pressing portions.

6. The tape forming jig according to claim 1,
wherein the forming hole comprises:
a first hole section into which a top end edge of the jelly roll is fitted; and
a second hole section formed with a narrower diameter than the first hole section so that a top end of the jelly roll does not enter.

7. The tape forming jig according to claim 6,
wherein the forming block has a thickness corresponding to at least a depth of the second hole section.

8. The tape forming jig according to claim 1, further comprising:
a first support member stretchable in length and provided such that one end is coupled to the forming plate and the other end is coupled to an external structure to be able to support the forming plate to be positioned at a predetermined height; and
a second support member provided such that one end is coupled to the forming block and the other end is coupled to the external structure and capable of supporting the forming block to be positioned relatively higher than the forming plate.

9. The tape forming jig according to claim 8,
wherein the first support member comprises:
a support housing fixedly coupled to the external structure;
a support rod that is translationally movably connected inside the support housing; and
a spring member wrapping the circumference of the support rod on the outside of the support housing,
wherein the support rod is configured such that one end is fixedly coupled to the plate body.

10. The tape forming jig according to claim 8,
wherein the second support member is configured to support the forming block so that the forming block is located at a position where the forming block is inserted into the forming hole when the forming plate is raised.

11. A jelly roll taping device, which comprises a tape forming jig according to any of claims 1 to 10, and folds the end circumference portion of an insulating tape in the insulating tape surrounding the circumference of a jelly roll with an electrode current collector plate disposed on the uppermost end surface and the space above the uppermost end surface of the jelly roll to attach them onto the electrode current collector plate, the jelly roll taping device comprising:
a top frame configured to suspend the tape forming jig at a predetermined height; and
a jelly roll lifting unit disposed below the tape forming jig and moving the jelly roll in an upward and downward direction.

12. The jelly roll taping device according to claim 11,
wherein the top frame is provided to suspend a plurality of tape forming jigs along the circumferential direction, and
the jelly roll lifting unit comprises:
a lifting rod that is located vertically below each of the tape forming jigs and has a backup tip at the top end for pushing the jelly roll up toward the forming hole and a roller at the bottom end; and
a cylindrical cam unit having a groove in which the roller is fitted on the outer circumferential surface, wherein the groove is in a curved shape along the circumferential direction so that the lifting rod moves up and down when rotating.

13. The jelly roll taping device according to claim 12,
wherein the jelly roll taping device is configured such that when the cylindrical cam unit rotates once, each of the lifting rods located vertically below each of the tape forming jigs moves up and down once.

14. The jelly roll taping device according to claim 12, further comprising:
a roll shelf provided below the tape forming jig and configured to support the jelly roll,
wherein the roll shelf comprises a tip passage hole through which the backup tip may pass, and
the backup tip of the lifting rod is configured to vertically pass through the tip passage hole provided in the roll shelf to lift the jelly roll from the roll shelf.

15. A jelly roll taping method for taping a jelly roll, which is a cylindrical electrode assembly, and an electrode current collector plate together with an insulating tape using a tape forming jig according to any one of claims 1 to 10, the jelly roll taping method comprising:
a step of attaching the electrode current collector plate to the uppermost end surface of the jelly roll;
a step of attaching the insulating tape to the jelly roll so that the circumference of the jelly roll and the space above the uppermost end surface of the jelly roll are wrapped by the insulating tape;
a primary tape forming step in which the end circumference portion of the insulating tape is introduced into the forming hole of the forming plate and gathered in unison toward the center of the forming hole; and
a secondary tape forming step in which the forming block is introduced into the forming hole in the opposite direction to the jelly roll to press the end circumference portion of the insulating tape gathered therein and attach it to the electrode current collector plate.
